# EUROPÄISCHE PATENTSCHRIFT

(11) **EP 3 844 197 B1**
(45) Veröffentlichungstag und Bekanntmachung des Hinweises auf die Patenterteilung: **07.06.2023**
(21) Anmeldenummer: 18762058.8
(22) Anmeldetag: 27.08.2018
(51) Int. Cl.: C08F 136/06, C08F 136/08, C08L 7/00, C08L 9/00

(54) **BIOMIMETISCHER SYNTHESEKAUTSCHUK**
BIOMIMETIC SYNTHETIC RUBBER
CAOUTCHOUC SYNTHÉTIQUE BIOMIMÉTIQUE

(43) Veröffentlichungstag der Anmeldung: 07.07.2021
(73) Patentinhaber: Fraunhofer-Gesellschaft zur Förderung der angewandten Forschung e.V., 80686 München (DE)
(72) Erfinder: WENDLER, Ulrich, 06118 Halle (DE); MALKE, Marlen, 06112 Halle (DE); MÜLLER, Lowis-Gerrit-Boje, 48431 Rheine (DE); SCHULZE GRONOVER, Christian, 48149 Münster (DE); PRÜFER, Dirk, 48145 Münster (DE); WÖTZEL, Jacqueline, 06719 Teutschenthal (DE); BEINER, Mario, 06258 Schkopau (DE); GUPTA, Gaurav, 06124 Halle(Saale) (DE)
(74) Vertreter: Maiwald GmbH
(86) Internationale Anmeldenummer: PCT/EP2018/072997
(87) Internationale Veröffentlichungsnummer: WO 2020/043268

(56) Entgegenhaltungen:
- EP-A1- 1 873 168
- EP-A1- 3 301 131
- EP-A2- 1 099 711
- EP-A2- 1 939 221
- US-A- 4 906 706
- US-A1- 2009 099 325
- US-A1- 2010 218 871
- US-A1- 2011 015 302
- US-A1- 2015 166 698

## Beschreibung

Die vorliegende Erfindung betrifft eine biomimetische Synthesekautschukzusammensetzung, die eine hohe Dehnkristallisation aufweist und daher sehr gut geeignet ist für die Herstellung gummielastischer Formkörper, die einer hohen mechanischen Belastung ausgesetzt sind (insbesondere Reifen bzw. deren Laufflächen) oder als spezielle Medizinprodukte (z.B. Schläuche) Anwendung finden.

Aus Naturkautschuk oder Synthesekautschuken durch Vernetzung (*"Vulkanisation"*) erhaltene Elastomere, die auch als Gummi bezeichnet werden, finden aufgrund ihrer elastischen Eigenschaften vielfältige Anwendung auf unterschiedlichsten Gebieten, z.B. für Reifen, Medizinprodukte (z.B. Schutzhandschuhe und Kondome) oder sonstige technische Gummiwaren.

Bekannte Synthesekautschuke sind beispielsweise Polymere, die durch Polymerisation von 1,3-Dien-Verbindungen wie 1,3-Butadien oder Isopren (2-Methylbuta-1,3-dien) erhalten werden.

Bei der Polymerisation des 1,3-Diens wie Isopren oder 1,3-Butadien können die Wiederholeinheiten des Polymers in Abhängigkeit von dem verwendeten Katalysator verschiedene isomere Formen ausbilden (z.B. die *cis-1,4-* oder *trans-1,4-Form).*

Die technisch relevante Form des Polyisoprens ist insbesondere das Poly(cis-1,4-isopren) (d.h. ein Polyisopren mit einem hohen Anteil an Wiederholeinheiten, die in der cis-1,4-Form vorliegen).

Bekannt ist die anionische Kettenpolymerisation des Isoprens, die beispielsweise durch eine Lithium-organische Verbindung wie Butyllithium initiiert wird.

Üblicherweise führt die anionische Polymerisation des Isoprens zu einem Anteil der cis-1,4-Form von weniger als 95%.

Ebenfalls bekannt ist die koordinative Kettenpolymerisation (Koordinationspolymerisation) des Isoprens in Anwesenheit eines Koordinationskatalysators. Über die Koordinationspolymerisation kann ein Polyisopren mit einem cis-Gehalt von mindestens 95% oder sogar mindestens 97% erhalten werden.

Polybutadien kann ebenfalls durch eine anionische Kettenpolymerisation oder eine Koordinationspolymerisation hergestellt werden, wobei Poly(cis-1,4-butadien) mit einem hohen cis-Gehalt insbesondere über die Koordinationspolymerisation zugänglich ist.

Ein geeigneter Koordinationskatalysator für die gezielte Herstellung eines Poly(cis-1,4-diens) mit sehr hohem cis-Gehalt ist beispielsweise ein Ziegler-Natta-Katalysator, der ein Übergangsmetall oder ein Seltenerdmetall und üblicherweise eine aluminiumorganische Verbindung enthält.

Koordinationskatalysatoren für die selektive Herstellung von Poly(cis-1,4-dienen) werden beispielsweise von Z. Zhang et al., Structure and Bonding, Vol. 137, 2010, S. 49-108 und in WO 2011/045393 A1 beschrieben.

Für die Reifenherstellung werden die Elastomere mit Füllstoffen wie SiO₂ und Ruß ("*Carbon Black*") gemischt. In diesem Zusammenhang ist bekannt, das Polymer mit funktionellen, polaren Gruppen zu versehen. Dies kann beispielsweise nach der Polymerisation erfolgen, wenn an den Enden der Polymerketten noch die katalytisch aktive Spezies vorliegt. Bei Zugabe geeigneter "Modifikator-verbindungen" können terminale funktionelle Gruppen (z.B. saure oder basische Gruppen) am Polymer angebracht werden. Dies wird auch als Endgruppen-funktionalisierung bezeichnet und bei den dabei erhaltenen Polymeren handelt es sich um Endgruppenfunktionalisierte Polymere.

Insbesondere die anionische Polymerisation eignet sich sehr gut für die Endgruppenfunktionalisierung von Polymeren. Aber auch für die Koordinationspolymerisation ist bekannt, terminale funktionelle Gruppen in das Polymer einzubringen.

Das Anbringen terminaler funktioneller Gruppen an Poly(cis-1,4-dienen), die über eine Koordinationspolymerisation in Anwesenheit eines Koordinationskatalysators hergestellt werden, beschreiben beispielsweise EP 1 873 168 A1, EP 1 939 221 A2 und EP 2 022 803 A2. Für die Herstellung einer Reifenzusammensetzung werden diese endgruppenfunktionalisierten Polymere mit geeigneten Füllstoffen wie Ruß oder SiO₂ oder anderen anorganischen Additiven gemischt.

Naturkautschuk (bzw. das nach dessen Vernetzung erhaltene Elastomer) weist in einigen Applikationsfeldern außergewöhnliche Eigenschaften auf, die mit den herkömmlichen Synthesekautschuken wie synthetischem Polyisopren oder Polybutadien bisher nicht erreicht werden konnten. Dieses Verhalten des Naturkautschuks ist auf eine scherinduzierte Kristallisation bzw. Dehnkristallisation (d.h. eine spontane reversible Versteifung des Materials bei Deformation unter mechanischer Belastung) zurückzuführen, die in den synthetischen Elastomeren in deutlich geringerer Intensität stattfindet.

Naturkautschuk wird aus dem Kautschukbaum *Hevea brasiliensis* gewonnen und weist daher den Nachteil einer mengenmäßig limitierten Verfügbarkeit auf.

Vor allem im medizinischen Bereich ist beim Naturkautschuk auch sein allergenes Potenzial (*"Latexallergie"*) nachteilig. Dieses allergene Potenzial ist auf die Anwesenheit von Proteinen im Naturkautschuk zurückzuführen.

J. Sakdapipanich et al., Rubber Chemistry and Technology, November 2008, Vol. 81, S. 753-766, untersuchten die Dehnkristallisation von Naturkautschuk sowie von modifiziertem, Protein- und/oder Lipid-freiem Naturkautschuk, dessen Proteine und/oder Lipide durch entsprechende Enzymbehandlung entfernt wurden. Die enzymatische Abtrennung der Proteine und Lipide führte zu einer Reduzierung der scherinduzierten Kristallisationsfähigkeit des Naturkautschuks. Gibt man die abgetrennte Lipidkomponente wieder zu dem Lipid- und Protein-freien Naturkautschuk, so zeigt die dabei erhaltene Zusammensetzung sogar eine weitere Abnahme der Dehnkristallisation.

Aufgrund der oben geschilderten Nachteile des Naturkautschuks (begrenzte Verfügbarkeit, allergenes Potenzial) sind Zusammensetzungen von Interesse, die auf synthetischen Elastomeren basieren und dennoch eine Dehnkristallisation zeigen, die derjenigen des Naturkautschuks möglichst nahe kommt.

US 2014/0343231 A1 beschreibt ein Polydien wie Polyisopren oder Polybutadien, das über eine anionische Polymerisation hergestellt wird und wobei in terminaler Position eine reaktive funktionelle Gruppe, insbesondere eine Maleimid-Gruppe, angebracht wird. Auf diese terminale funktionelle Gruppe wird anschließend ein weiteres Polymer, beispielsweise ein Polyacrylamid aufgepfropft.

H. Chu et al., Colloid and Polymer Science, February 2016, Vol. 294, S. 433-439, beschreiben die Herstellung eines chemisch modifizierten Polyisoprens. Als Ausgangsmaterial wurde ein über eine anionische Polymerisation hergestelltes Polyisopren mit einem cis-Gehalt von 73% verwendet. Methyl-Gruppen in nichtendständigen Monomereinheiten wurden in Carboxyl-haltige Gruppen überführt und an diese nicht endständigen Carboxylgruppen wurden anschließend über eine chemische Reaktion Phosphatidylcholin-Moleküle kovalent angebunden.

US 2015/166698 A1 beschreibt ein Verfahren zur Herstellung eines modifizierten Polyisoprens mit hohem cis-Gehalt, wobei Isoprenmonomere in Anwesenheit eines metallorganischen Katalysatorsystems, das ein Carboxylat eines Seltenerdmetalls, eine Organoaluminiumverbindung und einen Halogendonor enthält, polymerisiert werden.

US 2010/218871 A1 beschreibt eine Kautschukzusammensetzung, die durch das Compoundieren eines Füllstoff mit einer Kautschukkomponente erhältlich ist. Die Kautschukkomponente enthält (A) einen modifizierten konjugierten Dienkautschuk, der einen Gehalt an cis-Bindungen von mindestens 87 % und einen Gehalt an Vinylbindungen von höchstens 2 % sowie eine funktionelle Gruppe, die mit einem Füllstoff reaktiv ist, aufweist, und (B) ein modifiziertes Polymer.

EP 1 099 711 A2 beschreibt ein modifiziertes konjugiertes Dien-Polymer, erhalten durch Modifizieren oder Koppeln eines konjugierten Dien-Polymers mit mindestens einer Verbindung, die ausgewählt ist aus der Gruppe bestehend aus einer Chinonverbindung, einer Thiazolverbindung, einer Sulfenamidverbindung, einer Dithiocarbamatverbindung, einer Thiuramverbindung, einer Thioimidverbindung, einer Aminverbindung, einer Imidverbindung, einer Aldehyd- oder Thioaldehydverbindung.

US 2011/015302 A1 beschreibt ein Verfahren zum Herstellen eines modifizierten konjugierten Dienpolymers, umfassend einen Modifikationsschritt (A), der ein konjugiertes Dienpolymer, das einen cis-1,4-Bindungsgehalt von 98,5% oder mehr und ein aktives Ende aufweist, einer Modifikationsreaktion unterzieht, um eine Alkoxysilanverbindung mit zwei oder mehr reaktiven Gruppen in das aktive Ende des konjugierten Dienpolymers einzuführen, und einen Kondensationsschritt (B), der den Rest der eingeführten Alkoxysilanverbindung einer Kondensationsreaktion in der Gegenwart eines Kondensationskatalysators unterzieht.

EP 3 301 131 A1 beschreibt einen Reifen, umfassend eine Decklauffläche, die aus einer Decklaufflächen-Kautschukzusammensetzung gebildet ist, wobei die Decklaufflächen-Kautschukzusammensetzung eine Kautschukkomponente und einen Füllstoff umfasst. Die Kautschukzusammensetzung enthält ein feinteiliges Siliciumdioxid mit einer spezifischen Stickstoffadsorptionsoberfläche von 190 m²/g oder mehr in einer Menge von 50 Massenteilen oder mehr pro 100 Massenteile der Kautschukkomponente.

US 4,906,706 beschreibt ein Verfahren zur Herstellung von modifizierten Polymeren aus konjugierten Dienen, wobei ein konjugiertes Dien in einem inerten Lösungsmittel in Gegenwart eines Katalysators polymerisiert wird und das resultierende reaktive Polymer mit mindestens einer Modifizierungsverbindung modifiziert wird.

EP 1 939 221 A2 beschreibt ein Verfahren zum Herstellen eines funktionalisierten cis-1,4-Polydiens, wobei ein reaktives Polymer durch Polymerisation eines konjugierten Dienmonomers mit einem Katalysator auf Lanthanidbasis hergestellt wird und das reaktive Polymer mit einem Funktionalisierungsmittel in Kontakt gebracht wird, um dadurch ein Polymer mit einem cis-1,4-Bindungsgehalt von mindestens 99 % und einer Funktionalität von mindestens 80 % herzustellen.

EP 1 873 168 A1 beschreibt ein modifiziertes konjugiertes Dienpolymer, das erhältlich ist durch die Polymerisation einer konjugierten Dienverbindung unter Verwendung eines Katalysators, der eine Lanthanoid-Seltenerdelement-Verbindung in einem organischen Lösungsmittel enthält, und anschließende Modifizierung des erhaltenen Polymers mit einem Modifizierungsmittel.

US 2009/099325 A1 beschreibt ein Verfahren zur Herstellung eines funktionalisierten cis-1,4-Polydienpolymers, folgende Schritte umfassend: (i) Herstellung eines reaktiven Polymers mit einem cis-1,4-Bindungsanteil, der größer als 60 % ist, und einem reaktiven Kettenende durch Polymerisieren eines konjugierten Dienmonomers mit einem Katalysatorsystem auf Lanthanid-Basis und (ii) Umsetzen des reaktiven Kettenendes des Polymers mit einer heterocyclischen Nitrilverbindung.

Eine Aufgabe der vorliegen Erfindung ist die Bereitstellung einer Zusammensetzung, die über ein möglichst einfaches Verfahren zugänglich ist, auf synthetischen Elastomeren basiert und dennoch eine Dehnkristallisation zeigt, die derjenigen des Naturkautschuks möglichst nahe kommt.

Gelöst wird die Aufgabe durch eine vernetzbare Zusammensetzung, enthaltend
- ein vernetzbares synthetisches Poly(cis-1,4-dien), dessen cis-Gehalt mindestens 95% beträgt und das in terminaler Position eine funktionelle Gruppe aufweist,
- eine amphiphile Verbindung, wobei die amphiphile Verbindung ein polares Lipid, ein Protein; ein Glycerinester einer Fettsäure; ein kationisches Tensid oder ein amphoteres Tensid oder eine Mischung aus mindestens zwei der vorgenannten amphiphilen Verbindungen ist.

Mit der erfindungsgemäßen Zusammensetzung, die (i) ein Poly(cis-1,4-dien) mit hohem cis-Gehalt und endständiger funktioneller Gruppe sowie (ii) eine amphiphile Verbindung enthält, lässt sich nach erfolgter Vernetzung ein Elastomer erhalten, dessen Dehnkristallisation fast derjenigen des Naturkautschuks entspricht.

Polymere, bei denen in terminaler Position eine funktionelle Gruppe eingeführt wird, werden auch als endgruppenfunktionalisierte Polymere bezeichnet.

Die Verwendung eines synthetischen Poly(cis-1,4-diens) anstelle eines Naturkautschuks führt zu einem chemisch einheitlicheren Material, einer sehr homogenen Mischung mit der amphiphilen Verbindung und einer guten Verarbeitbarkeit (da eine Mastikation, d.h. mechanischer Abbau langkettiger Kautschukmoleküle, nicht mehr notwendig ist). Außerdem ergibt sich gegenüber dem Naturkautschuk eine Unabhängigkeit von jahreszeitlichen Schwankungen.

Wie dem Fachmann bekannt ist, wird mit dem cis-Gehalt der relative Anteil der Wiederholeinheiten des Polymers, die in der cis-1,4-Form vorliegen, angegeben.

Der cis-Gehalt wird über NMR-Spektroskopie bestimmt. Dabei wird folgendermaßen vorgegangen:
In der ¹H-NMR-Spektroskopie mit Feldstärken von mind. 400MHz (bezogen auf Protonenresonanz) wird der Anteil zwischen 1,2-Verküpfung ("Vinylanteil") und 1,4-Verknüpfung bestimmt. Die chemische Verschiebung (gemessen in CDCl₃) im Polyisopren für die 1,2-Verknüpfung liegt im Bereich von 4.68 - 4.76 ppm (endständige Protone der Vinylgruppe) und für die 1,4-Verknüpfung im Bereich von 5.13 ppm (olefinische Protonen). Die Unterscheidung der beiden möglichen 1,4-Verküpfungen *(cis* und *trans)* erfolgt mittels ¹³C-NMR Spektroskopie (bevorzugt ebenfalls mind. 400MHz-Geräte), die Unterschiede in der chemischen Verschiebung im ¹H-NMR-Spektrum lassen sich erst bei sehr hohen magnetischen Feldstärken (deutlich oberhalb von 400MHz-Geräten) detektieren. Die chemischen Verschiebungen im ¹³C-NMR-Spektrum liegen exemplarisch für Polyisopren für *cis* bei 23.4 ppm sowie für *trans* bei 17.2 ppm (Methyl-Gruppen). Die jeweiligen Anteile werden durch Integration bestimmt, hier ist auf eine hinreichende Grundlinienqualität zu achten, welche beispielsweise durch hohe Signal-Akkumulation erreicht werden kann.

Bevorzugt weist das Poly(cis-1,4-dien), insbesondere das Poly(cis-1,4-isopren) einen cis-Gehalt von mindestens 96% oder sogar mindestens 97% auf.

Bevorzugt ist das Poly(cis-1,4-dien) ein Poly(cis-1,4-isopren) oder ein Poly(cis-1,4-butadien) oder ein Gemisch dieser beiden Polymere.

Im Fall des Poly(cis-1,4-isoprens) wird bevorzugt Isopren als einziges Monomer für die Polymerisation eingesetzt und für das Poly(cis-1,4-butadien) wird bevorzugt 1,3-Butadien als einziges Monomer für die Polymerisation eingesetzt. Das Poly(cis-1,4-isopren) enthält also bevorzugt ausschließlich Monomereinheiten, die sich aus Isopren ableiten und das Poly(cis-1,4-butadien) enthält bevorzugt ausschließlich Monomereinheiten, die sich von 1,3-Butadien ableiten.

Das synthetische Poly(cis-1,4-dien) wird bevorzugt über eine Koordinationspolymerisation in Anwesenheit eines Koordinationskatalysators hergestellt.

Koordinationskatalysatoren für die selektive Herstellung von Poly(cis-1,4-dienen) werden beispielsweise von Z. Zhang et al., Structure and Bonding, Vol. 137, 2010, S. 49-108 und in WO 2011/045393 A1 beschrieben.

Der Koordinationskatalysator enthält bevorzugt ein Übergangsmetall (z.B. Titan) und/oder ein Seltenerdmetall. Bei dem Seltenerdmetall handelt es sich beispielsweise um ein Lanthanoid (wie z.B. Neodym). Weiterhin kann der Koordinationskatalysator beispielsweise eine aluminiumorganische Verbindung enthalten.

Ein geeigneter Koordinationskatalysator für die Herstellung des Poly(cis-1,4-diens) mit einem cis-Gehalt von mindestens 95% ist z.B. ein Ziegler-Natta-Katalysator.

Aufgrund der Verwendung eines Koordinationskatalysators für die Polymersynthese kann auch das in der erfindungsgemäßen Zusammensetzung vorliegende Poly(cis-1,4-dien) ein Übergangsmetall und/oder ein Seltenerdmetall enthalten. Diese Metalle können in geringen Mengen in dem Polydien vorliegen und stammen von dem beim Herstellungsverfahren verwendeten Katalysator.

Die synthetische Herstellung des Poly(cis-1,4-dien) ermöglicht die exakte Einstellung der Molmasse und kann so direkt - ohne den beim Naturkautschuk notwendigen Mastizierungsschritt zum Molmassenabbau - zur Herstellung von Elastomerbauteilen eingesetzt werden. Das Poly(cis-1,4-dien) weist beispielsweise eine zahlenmittlere Molmasse Mn im Bereich von 250-400 kg/mol auf. Die Polydispersität Mw/Mn liegt beispielsweise im Bereich von 2,0-2,8, wobei Mw die gewichtsmittlere Molmasse ist. Das synthetische Poly(cis-1,4-dien) ist bevorzugt ausschließlich linear. Im Gegensatz zum Naturkautschuk liegen störende Gelanteile (teilvernetzte Strukturen; Detektion über die Wiederfindungsrate in der GPC) nicht oder nur in sehr geringen Mengen vor.

Geeignete Polymerisationsbedingungen für die Herstellung von Poly(cis-1,4-dienen) über eine Koordinationspolymerisation sind dem Fachmann bekannt. Beispielsweise erfolgt die Polymerisation in Lösung. Die Polymerisationstemperatur liegt beispielsweise im Bereich von 35-80°C, bevorzugter 40-60°C und die Monomerkonzentration im Polymerisationsmedium (z.B. in der Lösung) liegt beispielsweise im Bereich von 5-40 Gew%, bevorzugter 10-30 Gew%.

Wie oben bereits erwähnt, weist das synthetische Poly(cis-1,4-dien) in terminaler Position eine funktionelle Gruppe auf. Polymere, bei denen in terminaler Position eine funktionelle Gruppe eingeführt wird, werden auch als endgruppenfunktionalisierte Polymere bezeichnet.

Die funktionelle Gruppe kann beispielsweise eine saure oder basische Gruppe sein.

Die funktionelle Gruppe ist z.B. eine Carboxyl- oder Carboxylat-, Hydroxyl-, Amin- oder Ammonium-, Ester- oder Cyano-Gruppe.

Die Endgruppenfunktionalisierung des synthetischen Poly(cis-1,4-diens) kann beispielsweise ausschließlich durch eine bestimmte funktionelle Gruppe (z.B. eine Carboxyl- oder Carboxylat-Gruppe) erfolgen. Alternativ ist es auch möglich, dass bei der Endgruppenfunktionalisierung des synthetischen Poly(cis-1,4-diens) zwei oder mehr funktionelle Gruppen eingeführt werden (z.B. in einem zwei- oder mehrstufigen Prozess der Endgruppenfunktionalisierung).

In einer bevorzugten Ausführungsform ist die funktionelle Gruppe in terminaler Position des synthetischen Poly(cis-1,4-diens) eine Carboxyl- oder Carboxylat-Gruppe.

Das Anbringen terminaler funktioneller Gruppen in Poly(cis-1,4-dienen), die über eine Koordinationspolymerisation in Anwesenheit eines Koordinationskatalysators hergestellt werden, ist bekannt und wird beispielsweise in EP 1 873 168 A1, EP 1 939 221 A2 und EP 2 022 803 A2 beschrieben.

Beispielsweise erfolgt die Polymerisation des Poly(cis-1,4-diens) in Anwesenheit des Koordinationskatalysators, bis der für die jeweilige Anwendung geeignete Polymerisationsgrad erreicht ist und anschließend erfolgt die Zugabe einer Modifikatorverbindung, über die die terminale funktionelle Gruppe in das Polydien eingebracht wird. Die Modifikatorverbindung wird beispielsweise direkt der Lösung, in der die Polymerisation durchgeführt wurde, zugegeben. Die Umsetzung des Poly(cis-1,4-diens) mit der Modifikatorverbindung kann beispielsweise bei einer Temperatur erfolgen, die der für die Polymerisation des Poly(cis-1,4-diens) verwendeten Temperatur entspricht. Alternativ können für die Umsetzung des Poly(cis-1,4-diens) mit der Modifikatorverbindung aber auch höhere Temperaturen verwendet werden.

Geeignete Modifikatorverbindungen für die Endgruppenfunktionalisierung von Polydienen sind dem Fachmann bekannt. Die Modifikatorverbindung ist beispielsweise eine Säure (insbesondere eine Carbonsäure), ein Säureanhydrid (beispielsweise CO₂ oder ein Carbonsäureanhydrid), ein Amin oder ein Ester oder eine Kombination aus mindestens zwei dieser Verbindungen.

Wie oben ausgeführt, enthält die erfindungsgemäße Zusammensetzung neben dem synthetischen Poly(cis-1,4-dien) mit hohem cis-Gehalt und Endgruppenfunktionalisierung noch eine amphiphile Verbindung.

Die amphiphile Verbindung kann natürlichen Ursprungs oder über eine chemische Synthese hergestellt worden sein.

Die amphiphile Verbindung ist ein polares Lipid, z.B. ein Phospholipid, ein Glycolipid oder ein Gemisch dieser beiden polaren Lipide; ein Protein; ein Glycerinester einer Fettsäure; ein kationisches Tensid oder ein amphoteres Tensid oder eine Mischung aus mindestens zwei der vorgenannten amphiphilen Verbindungen. Um das allergene Potenzial der Zusammensetzung zu verringern, kann es bevorzugt sein, dass die amphiphile Verbindung kein Protein ist und damit die resultierende Zusammensetzung Protein-frei ist.

In Abhängigkeit von der geplanten Anwendung kann der Anteil der amphiphilen Verbindung in der Zusammensetzung über einen breiten Bereich variiert werden. Beispielsweise enthält die erfindungsgemäße Zusammensetzung die amphiphile Verbindung in einer Menge von bis zu 30 Gew%, bevorzugter bis zu 20 Gew% z.B. in einer Menge von 0,05 Gew% bis 30 Gew%, bevorzugter 0,1 Gew% bis 20 Gew%.

Bevorzugt liegen das Poly(cis-1,4-dien) und die amphiphile Verbindung als Gemisch vor. Die amphiphile Verbindung ist also bevorzugt nicht kovalent (d.h. über eine chemische Bindung) an das Poly(cis-1,4-dien) gebunden.

In Abhängigkeit von der anvisierten Anwendung können der Zusammensetzung optional noch ein oder mehrere Additive zugegeben werden.

Soll die Zusammensetzung beispielsweise für die Herstellung eines Reifens verwendet werden, können der Zusammensetzung Ruß und/oder ein oder mehrere anorganische Füllstoffe wie z.B. SiO₂ zugegeben werden.

Für die Vernetzung des Polydiens kann die Zusammensetzung einen oder mehrere Vernetzer enthalten. Geeignete Vernetzer sind dem Fachmann bekannt. Beispielhaft können Schwefel oder Peroxide genannt werden.

Die Zusammensetzung kann als Feststoff oder auch als Lösung oder Dispersion vorliegen.

Weiterhin betrifft die vorliegende Erfindung ein Verfahren zur Herstellung der oben beschriebenen Zusammensetzung, folgende Verfahrensschritte umfassend:
- Herstellung eines Poly(cis-1,4-diens) mit einem cis-Gehalt von mindestens 95% durch eine Koordinationspolymerisation in Anwesenheit eines Koordinationskatalysators,
- Anbringen einer funktionellen Gruppe in terminaler Position des Poly(cis-1,4-diens),
- Mischen des Poly(cis-1,4-diens) mit einer amphiphilen Verbindung.

Hinsichtlich geeigneter Koordinationskatalysatoren und Polymerisationsbedingungen sowie bevorzugter Eigenschaften des Poly(cis-1,4-diens) kann auf die oben gemachten Ausführungen verwiesen werden.

Koordinationskatalysatoren für die selektive Herstellung von Poly(cis-1,4-dienen) werden beispielsweise von Z. Zhang et al., Structure and Bonding, Vol. 137, 2010, S. 49-108 und in WO 2011/045393 A1 beschrieben.

Der Koordinationskatalysator enthält bevorzugt ein Übergangsmetall (z.B. Titan) und/oder ein Seltenerdmetall. Bei dem Seltenerdmetall handelt es sich beispielsweise um ein Lanthanoid (wie z.B. Neodym). Weiterhin kann der Koordinationskatalysator beispielsweise eine aluminiumorganische Verbindung enthalten.

Ein geeigneter Koordinationskatalysator für die Herstellung des Poly(cis-1,4-diens) mit einem cis-Gehalt von mindestens 95% ist z.B. ein Ziegler-Natta-Katalysator.

Geeignete Polymerisationsbedingungen für die Herstellung von Poly(cis-1,4-dienen) über eine Koordinationspolymerisation sind dem Fachmann bekannt. Beispielsweise erfolgt die Polymerisation in Lösung. Die Polymerisationstemperatur liegt beispielsweise im Bereich von 35-80°C, bevorzugter 40-60°C und die Monomerkonzentration im Polymerisationsmedium (z.B. in der Lösung) liegt beispielsweise im Bereich von 5-40 Gew%, bevorzugter 10-30 Gew%.

Vor dem Mischen mit der amphiphilen Verbindung wird das Poly(cis-1,4-dien) noch einer Endgruppenfunktionalisierung unterzogen, d.h. in terminaler Position des Poly(cis-1,4-diens) wird eine funktionelle Gruppe angebracht. Hinsichtlich bevorzugter terminaler funktioneller Gruppen und geeigneter Verfahrensbedingungen für die Endgruppenfunktionalisierung des Poly(cis-1,4-diens) kann auf die obigen Ausführungen verwiesen werden.

Das Anbringen terminaler funktioneller Gruppen in Poly(cis-1,4-dienen), die über eine Koordinationspolymerisation in Anwesenheit eines Koordinationskatalysators hergestellt werden, ist bekannt und wird beispielsweise in EP 1 873 168 A1, EP 1 939 221 A2 und EP 2 022 803 A2 beschrieben.

Beispielsweise erfolgt die Polymerisation des Polydiens in Anwesenheit des Koordinationskatalysators, bis der für die jeweilige Anwendung geeignete Polymerisationsgrad erreicht ist und anschließend erfolgt die Zugabe einer Modifikatorverbindung, über die die terminale funktionelle Gruppe in das Polydien eingebracht wird. Die Modifikatorverbindung wird beispielsweise direkt der Lösung, in der die Polymerisation durchgeführt wurde, zugegeben.

Geeignete Modifikatorverbindungen für die Endgruppenfunktionalisierung von Polydienen sind dem Fachmann bekannt. Die Modifikatorverbindung ist beispielsweise eine Säure (insbesondere eine Carbonsäure), ein Säureanhydrid (beispielsweise CO₂ oder ein Carbonsäureanhydrid), ein Amin oder ein Ester oder eine Kombination aus mindestens zwei dieser Verbindungen.

Wie oben bereits erwähnt, ist die funktionelle Gruppe z.B. eine Carboxyl- oder Carboxylat-, Hydroxyl-, Amin- oder Ammonium-, Ester- oder Cyano-Gruppe.

Das Mischen des Poly(cis-1,4-diens) mit der amphiphilen Verbindung kann über gängige, dem Fachmann bekannte Methoden erfolgen.

Das Mischen des Endgruppen-funktionalisierten Poly(cis-1,4-diens) mit der amphiphilen Verbindung kann beispielsweise in der Lösung erfolgen, in der zuvor die Polymerisation und/oder die Endgruppenfunktionalisierung durchgeführt wurde(n). Alternativ kann das Poly(cis-1,4-dien) aus der Lösung, in der zuvor die Polymerisation und/oder die Endgruppenfunktionalisierung durchgeführt wurde(n), abgetrennt werden, optional in einer Flüssigkeit gelöst oder dispergiert werden und anschließend mit der amphiphilen Verbindung gemischt werden.

Bevorzugt werden das Poly(cis-1,4-dien) und die amphiphile Verbindung in einem flüssigen Medium miteinander gemischt. Um eine möglichst effiziente und homogene Mischung zu erzielen, liegt das Poly(cis-1,4-dien) bevorzugt gelöst in dem flüssigen Medium vor. Ein direktes Einmischen der amphiphilen Verbindung in das Poly(cis-1,4-dien) in einem Innenmischer, einem Walzwerk oder einem Extruder ist ebenfalls möglich.

Geeignete Rührvorrichtungen, in denen das Mischen des Poly(cis-1,4-diens) mit der amphiphilen Verbindung erfolgen kann, sind dem Fachmann bekannt. Beispielsweise kann die Rührvorrichtung ein Rühr- und/oder Knetwerk umfassen. Es können auch Innenmischer (z.B. ein Stempelkneter), Walzwerke oder Extruder eingesetzt werden.

Weiterhin betrifft die vorliegende Erfindung eine elastomere Zusammensetzung, erhältlich durch Vernetzung des Endgruppen-funktionalisierten Poly(cis-1,4-diens) in der oben beschriebenen Zusammensetzung.

Geeignete Bedingungen für die Vernetzung des Poly(cis-1,4-diens) sind dem Fachmann bekannt. Beispielsweise wird die Vernetzung durch eine geeignete thermische Behandlung initiiert.

Weiterhin betrifft die vorliegende Erfindung einen Formkörper, der die oben beschriebene elastomere Zusammensetzung enthält.

Da der Formkörper die elastomere Zusammensetzung enthält, kann man den Formkörper auch als gummielastischen oder elastomeren Formkörper bezeichnen.

Der Formkörper ist beispielsweise ein Reifen, ein Medizinprodukt (z.B. ein Schlauch, Schutzhandschuh oder ein Kondom) oder eine technische Gummiware (z.B. Dichtungen, Manschetten, Halbzeuge).

Weiterhin betrifft die vorliegende Erfindung die Verwendung der oben beschriebenen vernetzbaren Zusammensetzung für die Herstellung eines gummielastischen Formkörpers, bevorzugt eines Reifens, insbesondere der Lauffläche eines Reifens, oder eines Schlauchs.

Die vorliegende Erfindung wird anhand der nachfolgenden Beispiele eingehender beschrieben.

### Beispiele

### Vergleichsbeispiel 1:

Ein Poly(cis-1,4-isopren) mit einem cis-Gehalt von 98% wurde über eine Koordinationspolymerisation in Anwesenheit eines Neodym-haltigen Katalysators folgendermaßen hergestellt:
Entstabilisiertes Isopren wurde in getrocknetem Cyclohexan vorgelegt (10 Gew%), Temperierung des Systems auf 50°C, Aufgabe eines Nd-haltigen Katalysators (vertrieben von Comar Chemicals) gelöst in n-Hexan (1,0 Vol% bezogen auf Monomer), isotherme Reaktionszeit 3 h. Die erhaltene Polymerlösung wurde mit Isopropanol abgestoppt, mit Butylhydroxytoluol stabilisiert und mittels Koagulation/Strippung vom Lösungsmittel befreit.

Das hergestellte Poly(cis-1,4-isopren) wurde in Chloroform (10 Gew%) gelöst. Weiterhin wurde die Lösung mit 1 Gew% Dicumylperoxid (Vernetzer), bezogen auf das Polymer, versetzt.

Nach ausreichend intensivem Rühren wurde das Lösungsmittel abgedampft. Ein Film mit einer Dicke von 1 mm wurde bei 160°C thermisch behandelt, um die Vernetzung des Polyisoprens zu initiieren.

Für die vernetzte Zusammensetzung wurde anschließend die Dehnkristallisation folgendermaßen bestimmt:
Basierend auf uniaxial gedehnten Gummistreifen wurden im Bereich 0% bis 650% statischer Dehnung relative Kristallinitäten bestimmt. Die dabei verwendete Methode basiert auf der Analyse von eindimensionalen Röntgenstreudaten, die senkrecht zur Dehnrichtung detektiert wurden. Nach der Quantifizierung der Intensität (Flächenauswertung) von amorphen (Halo) und kristallinen Streubeiträgen ((200) und (120) Reflexe) wird ein relativer Kristallisationsgrad in Abhängigkeit von der statischen Dehnung εₛₜₐₜ bestimmt D_{c,rel} = (I₂₀₀ + I₁₂₀) / (Iₕₐₗₒ + I₂₀₀ + I₁₂₀) = I_{cryst} / Iₜₒₜₐₗ. Die relativen Kristallisationsgrade wurden für 10-15 statische Dehnungen berechnet und graphisch dargestellt. Basierend auf der graphischen Darstellung wurde durch lineare Extrapolation der Dehnungswert εₒₙₛₑₜ ermittelt, bei dem die dehninduzierte Kristallisation einsetzt.

Bei 600% statischer Dehnung wurde ein relativer Kristallisationsgrad D_{c,600%} von etwa 28% beobachtet. Das Einsetzen der Kristallisation wurde bei Dehnungen εₒₙₛₑₜ von ca. 350 % detektiert.

### Vergleichsbeispiel 2:

Es wurde unter den gleichen Polymerisationsbedingungen wie in Vergleichsbeispiel 1 ein Poly(cis-1,4-isopren) hergestellt. Das Poly(cis-1,4-isopren) wies einen *cis-*Gehalt von 98% auf. Nach erfolgter, noch nicht abgestoppter Polymerisation wurde in die Reaktionslösung noch CO₂ als Modifikatorverbindung für die Endgruppenfunktionalisierung des Polyisoprens eingeleitet. Dadurch wurde ein Poly(cis-1,4-isopren) mit terminalen Carboxylgruppen erhalten. Die erhaltene Polymerlösung wurde mit Isopropanol abgestoppt, mit Butylhydroxytoluol stabilisiert und klassisch mittels Koagulation/Strippung vom Lösungsmittel befreit.

Das hergestellte Poly(cis-1,4-isopren) wurde in Chloroform (10 Gew%) gelöst. Danach wurde die Lösung mit 1 Gew% Dicumylperoxid (Vernetzer), bezogen auf das Polymer, versetzt. Nach ausreichend intensivem Rühren wurde das Lösungsmittel abgedampft. Ein Film mit einer Dicke von 1 mm wurde bei 160°C thermisch behandelt, um die Vernetzung des Polyisoprens zu initiieren.

Für die vernetzte Zusammensetzung wird anschließend die Dehnkristallisation gemäß der in Vergleichsbeispiel 1 beschriebenen Methode bestimmt.

Bei 600% statischer Dehnung wurde ein relativer Kristallisationsgrad *D*_{c600%} von etwa 32,9% beobachtet. Das Einsetzen der Kristallisation wurde bei Dehnungen εₒₙₛₑₜ von ca. 350% detektiert.

### Erfindungsgemäßes Beispiel 1:

Es wurde zunächst unter den gleichen Polymerisationsbedingungen wie im Vergleichsbeispiel 1 ein Poly(cis-1,4-isopren) hergestellt. Nach erfolgter, noch nicht abgestoppter Polymerisation wurde in die Reaktionslösung noch CO₂ als Modifikatorverbindung für die Endgruppenfunktionalisierung des Polyisoprens eingeleitet. Dadurch wurde ein Poly(cis-1,4-isopren) mit terminalen Carboxylgruppen erhalten. Das Poly(cis-1,4-isopren) wies einen cis-Gehalt von 98% auf. Die erhaltene Polymerlösung wurde mit Butylhydroxytoluol stabilisiert und mittels Koagulation/Strippung vom Lösungsmittel befreit.

Das hergestellte Poly(cis-1,4-isopren) wurde in Chloroform (10 Gew%) gelöst. Weiterhin wurde die Lösung mit 0,4 Gew% L-alpha-Lecithin (einem Phospholipid, das als amphiphile Verbindung fungiert) und 1 Gew% Dicumylperoxid (Vernetzer), bezogen auf das Polymer, versetzt.

Nach ausreichend intensivem Rühren wurde das Lösungsmittel abgedampft. Ein Film mit einer Dicke von 1 mm wurde bei 160°C thermisch behandelt, um die Vernetzung des Polyisoprens zu initiieren.

Für die vernetzte Zusammensetzung wurde anschließend die Dehnkristallisation gemäß der in Vergleichsbeispiel 1 beschriebenen Methode bestimmt.

Bei 600% statischer Dehnung wurde ein relativer Kristallisationsgrad D_{c,600%} von 46,9% beobachtet. Das Einsetzen der Kristallisation wurde bei Dehnungen εₒₙₛₑₜ von ca. 300% detektiert.

### Vergleichsbeispiel 3:

Zu Vergleichszwecken wurde auch noch die Dehnkristallisation an einer identisch vulkanisierten Naturkautschukprobe bestimmt.

Bei 600% statischer Dehnung wurde dabei ein relativer Kristallisationsgrad *D*_{c,600%} von 42,4% beobachtet. Das Einsetzen der Kristallisation wurde bei Dehnungen εₒₙₛₑₜ von ca. 200% detektiert.

Mit der erfindungsgemäßen Zusammensetzung, die das endgruppenfunktionalisierte Poly(cis-1,4-dien) und die amphiphile Verbindung enthält, lässt sich nach erfolgter Vernetzung eine Dehnkristallisation realisieren, die fast derjenigen des Naturkautschuks entspricht. Die relativen Kristallinitäten bei 600% Dehnung *D*_{c,600%} übertreffen die für als Referenz untersuchte Naturkautschukprobe (SRV) mit identischer Vernetzung.

## Patentansprüche

1. Zusammensetzung, enthaltend
- ein vernetzbares synthetisches Poly(cis-1,4-dien), dessen cis-Gehalt mindestens 95% beträgt und das in terminaler Position eine funktionelle Gruppe aufweist,
- eine amphiphile Verbindung, wobei die amphiphile Verbindung ein polares Lipid, ein Protein; ein Glycerinester einer Fettsäure; ein kationisches Tensid oder ein amphoteres Tensid oder eine Mischung aus mindestens zwei der vorgenannten amphiphilen Verbindungen ist.

2. Zusammensetzung nach Anspruch 1, wobei das Poly(cis-1,4-dien) ein Poly(cis-1,4-isopren) oder ein Poly(cis-1,4-butadien) oder ein Gemisch dieser beiden Polymere ist; und/oder wobei das synthetische Poly(cis-1,4-dien) über eine Polymerisation in Anwesenheit eines Koordinationskatalysators, der ein Übergangsmetall oder ein Seltenerdmetall enthält, erhältlich ist.

3. Zusammensetzung nach Anspruch 1 oder 2, wobei die terminale funktionelle Gruppe eine Carboxyl- oder Carboxylat-, eine Hydroxyl-, eine Amin- oder Ammonium-, eine Ester- oder eine Cyano-Gruppe ist.

4. Zusammensetzung nach einem der vorstehenden Ansprüche, wobei die amphiphile Verbindung in der Zusammensetzung in einer Menge von maximal 30 Gew% vorliegt.

5. Zusammensetzung nach einem der vorstehenden Ansprüche, wobei die amphiphile Verbindung nicht kovalent an das Poly(cis-1,4-dien) gebunden ist.

6. Zusammensetzung nach einem der vorstehenden Ansprüche, außerdem einen Vernetzer, insbesondere Schwefel oder ein Peroxid, enthaltend.

7. Verfahren zur Herstellung der Zusammensetzung nach einem der Ansprüche 1-6, folgende Verfahrensschritte umfassend:
- Herstellung eines Poly(cis-1,4-dien) mit einem cis-Gehalt von mindestens 95% durch eine Polymerisation in Anwesenheit eines Koordinationskatalysators,
- Anbringen einer funktionellen Gruppe in terminaler Position des Poly(cis-1,4-dien),
- Mischen des Poly(cis-1,4-dien) mit der amphiphilen Verbindung.

8. Verfahren nach Anspruch 7, wobei das Poly(cis-1,4-dien) mit einer Modifikatorverbindung umgesetzt und dadurch in terminaler Position des Poly(cis-1,4-dien) eine funktionelle Gruppe eingeführt wird.

9. Elastomere Zusammensetzung, erhältlich durch Vernetzung des Poly(cis-1,4-dien) in der Zusammensetzung nach einem der Ansprüche 1-6.

10. Formkörper, enthaltend die elastomere Zusammensetzung nach Anspruch 9.

11. Formkörper nach Anspruch 10, wobei der Formkörper ein Reifen, ein Medizinprodukt oder ein technisches Gummiprodukt ist.

12. Verwendung der Zusammensetzung nach einem der Ansprüche 1-6 für die Herstellung eines Formkörpers, bevorzugt eines Reifens oder eines Schlauchs.

## Claims

1. Composition, comprising
- a crosslinkable synthetic cis-1,4-polydiene having a cis content of at least 95% and a functional group in the terminal position,
- an amphiphilic compound, wherein the amphiphilic compound is a polar lipid, a protein; a glycerol ester of a fatty acid; a cationic surfactant or an amphoteric surfactant or a mixture of at least two of said amphiphilic compounds.

2. Composition according to Claim 1, wherein the *cis-*1,4-polydiene is a cis-1,4-polyisoprene or a *cis-*1,4-polybutadiene or a mixture of these two polymers; and/or wherein the synthetic cis-1,4-polydiene is obtainable via a polymerization in the presence of a coordination catalyst that contains a transition metal or a rare earth metal.

3. Composition according to Claim 1 or 2, wherein the terminal functional group is a carboxyl or carboxylate group, a hydroxyl group, an amine or ammonium group, an ester group or a cyano group.

4. Composition according to any of the preceding claims, wherein the amphiphilic compound is present in the composition in an amount of not more than 30% by weight.

5. Composition according to any of the preceding claims, wherein the amphiphilic compound is not covalently bonded to the cis-1,4-polydiene.

6. Composition according to any of the preceding claims, additionally comprising a crosslinker, in particular sulfur or a peroxide.

7. Process for producing the composition according to any of Claims 1-6, comprising the following process steps:
- producing a cis-1,4-polydiene having a cis content of at least 95% by a polymerization in the presence of a coordination catalyst,
- attaching a functional group in the terminal position of the cis-1,4-polydiene,
- mixing the cis-1,4-polydiene with the amphiphilic compound.

8. Process according to Claim 7, wherein the *cis-1,4-*polydiene is reacted with a modifier compound, with the result that a functional group is introduced in the terminal position of the cis-1,4-polydiene.

9. Elastomeric composition obtainable by crosslinking of the cis-1,4-polydiene in the composition according to any of Claims 1-6.

10. Shaped body comprising the elastomeric composition according to Claim 9.

11. Shaped body according to Claim 10, wherein the shaped body is a tyre, a medical device or an industrial rubber product.

12. Use of the composition according to any of Claims 1-6 for the production of a shaped body, preferably a tyre or a hose.

## Revendications

1. Composition, contenant
- un poly(cis-1,4-diène) synthétique réticulable, dont la teneur en *cis* est d'au moins 95 % et qui présente un groupe fonctionnel en position terminale,
- un composé amphiphile, le composé amphiphile étant un lipide polaire, une protéine ; un ester de glycérine d'un acide gras ; un tensioactif cationique ou un tensioactif amphotère ou un mélange d'au moins deux des composés amphiphiles mentionnés précédemment.

2. Composition selon la revendication 1, le poly(cis-1,4-diène) étant un poly(cis-1,4-isoprène) ou un poly(cis-1,4-butadiène) ou un mélange de ces deux polymères ; et/ou le poly(cis-1,4-diène) synthétique pouvant être obtenu par le biais d'une polymérisation en présence d'un catalyseur de coordination qui contient un métal de transition ou un métal des terres rares.

3. Composition selon la revendication 1 ou 2, le groupe fonctionnel terminal étant un groupe carboxyle ou un groupe carboxylate, un groupe hydroxyle, un groupe amine ou un groupe ammonium, un groupe ester ou un groupe cyano.

4. Composition selon l'une quelconque des revendications précédentes, le composé amphiphile étant présent dans la composition en une quantité maximale de 30 % en poids.

5. Composition selon l'une quelconque des revendications précédentes, le composé amphiphile n'étant pas lié de manière covalente au poly(cis-1,4-diène).

6. Composition selon l'une quelconque des revendications précédentes, contenant en outre un agent de réticulation, en particulier le soufre ou un peroxyde.

7. Procédé de préparation de la composition selon l'une quelconque des revendications 1 à 6, comprenant les étapes de procédé suivantes :
- préparation d'un poly(cis-1,4-diène) doté d'une teneur en *cis* d'au moins 95 % par une polymérisation en présence d'un catalyseur de coordination,
- placement d'un groupe fonctionnel en position terminale du poly(cis-1,4-diène),
- mélange du poly(cis-1,4-diène) avec le composé amphiphile.

8. Procédé selon la revendication 7, le poly(cis-1,4-diène) étant transformé avec un composé modificateur et par conséquent un groupe fonctionnel est introduit en position terminale du poly(cis-1,4-diène).

9. Composition élastomérique, pouvant être obtenue par réticulation du poly(cis-1,4-diène) dans la composition selon l'une quelconque des revendications 1 à 6.

10. Corps moulé, contenant la composition élastomérique selon la revendication 9.

11. Corps moulé selon la revendication 10, le corps moulé étant un pneu, un produit médical ou un produit technique en caoutchouc.

12. Utilisation de la composition selon l'une quelconque des revendications 1 à 6 pour la préparation d'un corps moulé, préférablement d'un pneu ou d'un tuyau.
